# EUROPEAN PATENT APPLICATION

(11) **EP 3 561 823 A1**
(43) Date of publication of application: **30.10.2019**
(21) Application number: 19382317.6
(22) Date of filing: 26.04.2019
(51) Int. Cl.: H01F 27/02, H01F 27/04, H01F 27/40, H01F 29/02

(54) **HIGH-VOLTAGE ELECTRICAL EQUIPMENT WITH A DEVICE FOR LIMITING THE MAGNETISING CURRENT**

(30) Priority: 27.04.2018 ES 201830609 U
(71) Applicant: Ormazabal Corporate Technology, A.I.E., 48340 Amorebieta-Etxano (Vizcaya) (ES)
(72) Inventor: LARRIETA ZUBIA, Javier, 48340 AMOREBIETA-ETXANO (Vizcaya) (ES); LARRACOECHEA ZULUAGA, Ibon, 48340 AMOREBIETA-ETXANO (Vizcaya) (ES); DEL RÍO ETAYO, Luis, 48340 AMOREBIETA-ETXANO (Vizcaya) (ES)
(74) Representative: Herrero & Asociados, S.L.

(57) **Abstract**

The high-voltage electrical equipment of the invention has means for limiting the magnetising current which arises when a transformer is energised, upon re-establishing a system when the voltage suddenly increases after having isolated a fault or when two transformers are energised in parallel, as well as connecting/disconnecting the equipment from the electric power distribution network or selecting the number of coils of a primary winding in order to obtain the adjustment of the voltage in a secondary winding, for which it mainly has a tank (3) inside of which it has a dielectric medium (4) and a device (2) for limiting the magnetising current that in turn has at least one operating position (5, 6, 7, 8, 9, 10, 29) per phase, at least one operating medium (11, 12) per phase, and at least one first switching current limiting element (17) per phase.

## Description

### OBJECT OF THE INVENTION

The present invention relates to the field of distribution and transformation of electrical energy, and more specifically to a high-voltage electrical equipment, such as a transformer, which comprises a limiting device of the magnetising current that arises when a transformer is energised, when the voltage suddenly increases after having isolated a fault and the system is re-established, or when two transformers are energised in parallel.

Furthermore, said device for limiting the magnetising current comprises an operating position that enables the high-voltage electrical equipment to be connected/disconnected from the electric power distribution network. Likewise, this device enables the selection of the number of coils of a primary winding of the high-voltage electrical equipment to thus obtain the regulation of the voltage in a secondary winding of the high-voltage electrical equipment itself.

### BACKGROUND OF THE INVENTION

When a high-voltage electrical equipment, such as for example, a distribution transformer, is energised or the voltage suddenly increases after having isolated a fault and the system is re-established, or when two transformers are energised in parallel, a current arises through the primary winding of the electrical equipment which is referred to as magnetising or inrush current. This magnetising current, which is up to 10 to 50 times greater than the nominal current of the high-voltage electrical equipment, is a transient condition that can last several cycles. The magnitude and duration thereof depend on external and design factors, such as for example, the impedance of the power supply, capacity of the transformer, magnetic characteristics of the core, connection of the windings, etc.

The magnetising current is a condition of the transformer itself during energisation and not a fault, and one of the characteristics thereof is that it only circulates through the winding that is energised, which can be seen as a fault condition by the protection.

As it is a short-term current, protections are used in the network that do not act very quickly, that is, the overcurrent protection must react quickly against an overload or short-circuit, but it must not interrupt the circuit when these types of magnetising currents are generated. This is a very important requirement to take into account when designing the protection system of transformers.

In this regard, different methods are known for limiting the effect of the magnetising current, in which resistors or relays are used. There are a variety of configuration strategies for relays that enable suitable operation. These methods base their algorithm on the damping time of the fault currents and the magnetising current, other methods involve the decomposition of the signal in harmonics using the Fourier series, since several studies reveal that the magnetising currents increase the second harmonic up to 30% above the nominal current, so the relay compares said harmonic with the fault and based on the duration interval performs the appropriate protection operation.

All these magnetising current limiting methods are normally used in power transformations, those transformations that handle large magnitudes of volt amperes (VA), of powers greater than 1000KVA, which are generally installed in electric power distribution substations and also in large generation plants, where the power transformers raise the voltage levels of the generated energy to higher voltage magnitudes, in order to transport the electric power through the transmission lines.

Other power transformations carry out a delicate function when they exclusively feed a single equipment. For example, in a heavy industry, to power high-power engines or large furnaces.

It is not common to use magnetising current limiting methods or systems in distribution transformers, electrical equipment used to take the voltage of distribution networks in populated areas and transform it into adequate voltages at the level of the residential, commercial, industrial or institutional users.

In addition, the use of resistors to limit the magnetising current involves the use of contactors for the connection/disconnection of said resistors, called pre-insertion resistors, which are connected for a short time before the closure occurs of the main contact of the switches that allow the power supply of the installations, limiting the overvoltage during the switching operation.

Furthermore, the systems for limiting the effect of the magnetising current are installed externally to the transformers, they are not part of the same transformers, which entails the drawback of needing more space in the facilities, as well as the need to carry out maintenance of said systems. In this way, examples of solutions such as those published in documents US2010039737A1, GB933473A or WO2016000080A1 can be cited.

Distribution transformers are also applicable to renewable energies, where step-up voltage transformers are used to connect the generated energy to the distribution network, such as in solar farm or wind farm facilities. In these types of facilities, in addition to comprising said step-up distribution transformers, there is also an electrical switchgear with operating and protection functions. When the connection to the distribution network is made through an automatic high-voltage circuit breaker, the protection elements (and measures, depending on the case) such as the overcurrent functions and voltage protections, must be included. This automatic circuit breaker, in addition to clearing faults, also has the function of connecting/disconnecting the step-up distribution transformer from the distribution network in the event that losses in the iron at night are to be avoided, so a connection operation and one disconnection operation must carried out as a minimum per day in the case of solar parks, that is, the step-up distribution transformer is connected when the photovoltaic cells begin to capture solar energy at the beginning of the day and said transformer is disconnected from the high-voltage distribution network when photovoltaic cells stop capturing solar energy at the end of the day.

This connection/disconnection operation that the circuit breaker must carry out every day becomes a large number of operations over the year, which entails the drawback of wear and premature aging of the circuit breaker, the fuses and the transformer.

### DESCRIPTION OF THE INVENTION

The invention relates to a high-voltage electrical equipment, more specifically a distribution transformer, applicable to electric power distribution and transformation networks, comprising a tank with a dielectric medium that at least partially fills said tank.

Inside the tank and immersed in the dielectric medium, it comprises a primary winding and a secondary winding, as well as a device for limiting the magnetising current. In this way, the device for limiting the magnetising current is an element that forms part of the same transformer, it is an internal element of the transformer, so that the space required in the facilities is reduced and a maintenance routine of the device for limiting the magnetising current is also avoided since the latter is installed in the dielectric medium comprising the transformer, such as for example in oil, gas or another dielectric medium.

Preferably, the device for limiting the magnetising current comprises:
- at least one operation position for each phase of the transformer,
- at least one operation means for each phase of the transformer,
- at least one first switching current limiting element for each phase of the transformer, and
- at least one second start-up/shut-down current limiting element for each phase of the transformer.

The different operating positions of the device for limiting the magnetising current are distributed in the primary winding of the transformer, such that at least one operating position corresponds to the start-up position of the transformer and comprises at least one connection point, while the rest of the operating positions correspond to at least one electrical outlet, thus the number of coils in the primary winding is variable, such that it is possible to automatically regulate the voltage in the secondary winding of the high-voltage electrical equipment or transformer. In this way, by means of the use of a device with said characteristics, the magnetising current can be limited and the change of electrical outlets can be carried out.

The first switching current limiting element, which can be a resistor, makes it possible to limit the short-circuit current that originates due to the change of electrical outlets.

The second start-up/shut-down current limiting element, such as an impedance (also referred to as start-up/shut-down impedance), corresponds to the start-up/shut-down position of the transformer. This second start-up/shutdown current limiting element is connected/disconnected by means of the operating means of the device for limiting the magnetising current, and said second start-up/shut-down current limiting element is responsible for limiting said magnetising current.

In this way, the operating means of the device for limiting the magnetising current enables the tap change of the transformer, as well as the connection/disconnection of the second start-up/shut-down current limiting element. In this way, the need to use other operating means, such as for example a contractor, is avoided for the connection/disconnection of the second start-up/shut-down current limiting element. The operating means of the present invention can comprise a vacuum circuit breaker.

The device for limiting the magnetising current of the present invention comprises a first plate made of insulating material and a second plate also made of insulating material, between which are mounted:
- at least one operating means,
- the first switching current limiting element,
- the connection point corresponding to the start-up position of the transformer, and at least one electrical outlet.

Both insulating plates can be joined by means of screws.

The device for limiting the magnetising current of the invention has a flat and compact configuration, due to which it can be installed both horizontally (underneath the top lid of the transformer) and vertically (on a side of the transformer) without changing the consecutive arrangement of the transformer.

The possibility that the device for limiting the magnetising current of the invention can comprise an operating position corresponding to the connection/disconnection position of the current of the high-voltage electrical equipment has been envisaged. In this way, the function of connecting/disconnecting the high-voltage electrical equipment from the distribution network is carried out by means of the device for limiting the magnetising current, thus reducing the number of operations of the electrical switchgear (such as the automatic circuit breaker) on the high-voltage side and thereby extending the life of said electrical switchgear.

Lastly, the possibility of the high-voltage electrical equipment being able to comprise vacuum tap changer means installed inside the tank immersed in the dielectric medium is envisaged. The combination of an on-load tap changer device with a vacuum tap changer means enables the latter to adjust the voltage during the start-up of the high-voltage electrical equipment such that drops in voltage from the head power station so that the on-load tap changer device operates on the nominal voltage, for which the high-voltage electrical equipment has been designed.

### DESCRIPTION OF THE FIGURES

Figure 1 shows a single-line diagram representing the state of the art wherein the device for limiting the magnetising current (2) is arranged outside the high-voltage electrical equipment (1), as an element independent to the high-voltage electrical equipment.
Figure 2 shows a single-line diagram of the high-voltage electrical equipment object of the present invention according to a first possible embodiment with the device for limiting the magnetising current.
Figure 3 shows a perspective view of the device for limiting the magnetising current.
Figure 4 shows a cross-sectional elevation view of the high-voltage electrical equipment of the invention with the device for limiting the magnetising current mounted inside the same according to a first embodiment of the invention.
Figure 5 shows a single-line diagram of the high-voltage electrical equipment object of the present invention according to a second possible embodiment with the device for limiting the magnetising current, further equipped with an operating position for connecting/disconnecting the high-voltage electrical equipment from the electric power distribution network.
Figure 6 shows a cross-sectional elevation view of the high-voltage electrical equipment of the invention with the device for limiting the magnetising current and the vacuum tap changer means mounted inside the same according to a second embodiment of the invention.

### PREFERRED EMBODIMENT OF THE INVENTION

Several preferred exemplary embodiments are described below that refer to the above-cited figures, without limiting or reducing the scope of protection of the present invention.

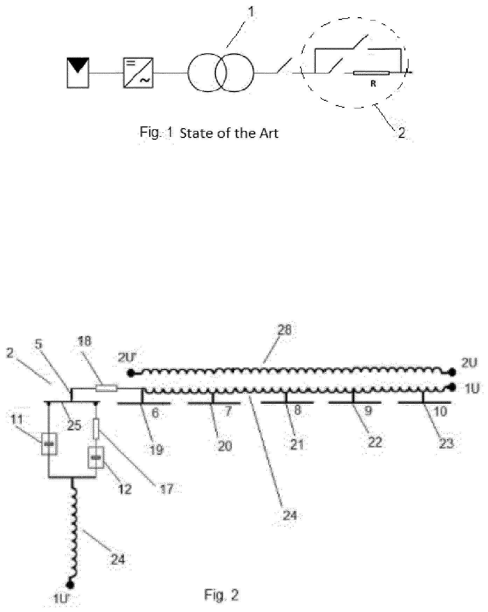

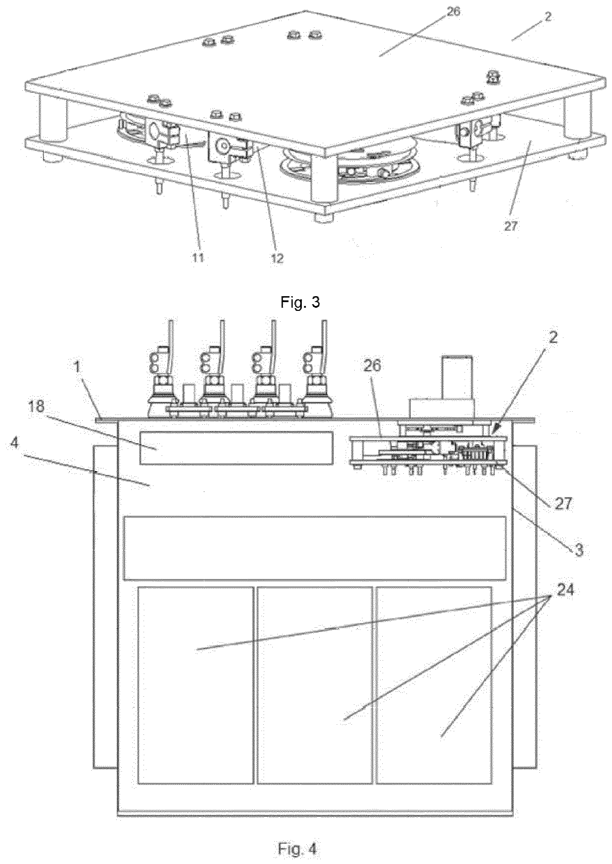

According to a first embodiment of the invention, as shown in figure 4, the high-voltage electrical equipment (1), such as for example a distribution transformer, comprises a device (2) for limiting the magnetising current that is installed inside a tank (3) of the high-voltage electrical equipment (1) and immersed in a dielectric medium (4) that is contained in said tank (3). Unlike the state of the art represented in figure 1, the device (2) for limiting the magnetising current of the present invention is installed inside the high-voltage electrical equipment (1), which prevents the need to carry out the maintenance of the device (2), since it is insulated in a dielectric medium (4), such as for example oil.

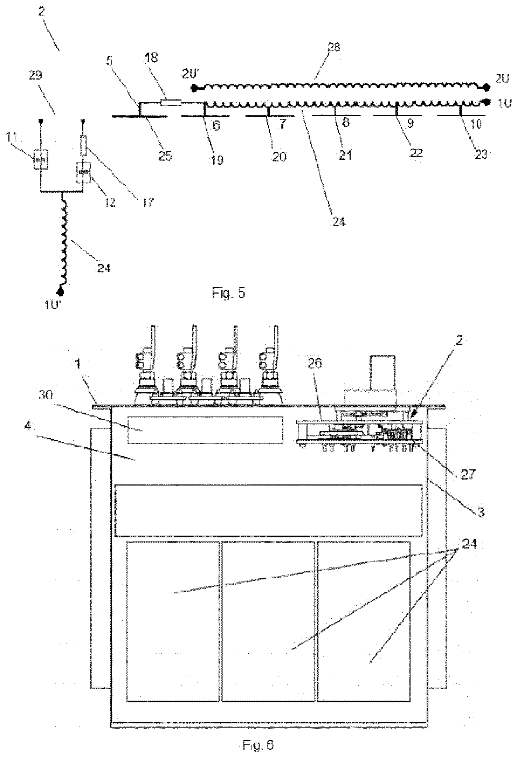

The device (2) for limiting the magnetising current comprises at least one operating position (5, 6, 7, 8, 9, 10, 29) per phase, at least one operating means (11, 12) per phase, a first switching current limiting element (17) per phase and a second start-up/shut-down current limiting element (18) per phase, as can be seen in figures 2 and 5.

The second start-up/shut-down current limiting element (18), which can be for example an impedance, corresponds to the operating position (5), which operating position corresponds to the start-up position of the high-voltage electrical equipment (1), so that the magnetising current that may arise due to the energisation of the high-voltage electrical equipment (1), due to a sudden increase of voltage after having isolated a fault and re-established the circuit or due to the energisation in parallel of another electrical equipment (2), would be restricted by the second start-up/shut-down current limiting element (18). This restriction of the magnetising current would be carried out by means of the second start-up/shut-down current limiting element (18) with the device (2) in the start-up position or the operating position (5). In this operating position (5), the second start-up/shut-down current limiting element (18) is connected/disconnected by means of the operating means (11, 12), which can consist of, for example, a vacuum circuit breaker.

The operating position (5) comprises at least one connection point (25) in a primary winding (24) of the high-voltage electrical equipment (1), as shown in figures 2 and 5. Similarly to this operating position (5), the remaining operating positions (6, 7, 8, 9, 10, 29) also belong to the primary winding (24), at least one power outlet (19, 20, 21, 22, 23) respectively corresponding to the operating positions (6, 7, 8, 9, 10), the number of coils in the primary winding (24) therefore being variable such that it enables the voltage in a secondary winding (28) of the high-voltage electrical equipment (1) to be automatically regulated. In this way, the same device (2) for limiting the magnetising current also regulates the voltage.

Figure 5 shows a second possible embodiment wherein the device for limiting the magnetising current of the first embodiment (figure 2) further comprises an additional operating position (29) for connecting/disconnecting the electrical equipment (1) from the electric power distribution network.

The device (2) for limiting the magnetising current comprises a first plate (26) made of insulating material and a second plate (27) also made of insulating material, between each plate (26, 27) there being mounted at least one operating means (11, 12), a first switching current limiting element (17) that enables the short-circuit current that originates to be limited due to the change between the operating positions (5, 6, 7, 8, 9, 10), the connection point (25) and at least one power outlet (19, 20, 21, 22, 23), as shown in figures 2 and 3.

The device (2) for limiting the magnetising current comprises a flat and compact configuration so that said device (2) can be installed both horizontally (underneath the lid of the high-voltage electrical equipment (1)) and vertically (on a side of the high-voltage electrical equipment (1)) without changing the consecutive arrangement of the high-voltage electrical equipment (1), as shown in figure 4.

According to a second embodiment of the invention, as shown in figure 6, the high-voltage electrical equipment (1), in addition to the device (2) for limiting the magnetising current, can comprises a vacuum tap changer means (30) that is installed inside the tank (3) of the high-voltage electrical equipment (1) and immersed in a dielectric medium (4) that is contained in said tank (3).

## Claims

1. A high-voltage electrical equipment (1) comprising a tank (3) with a dielectric medium (4) that at least partially fills the tank (3), **characterised in that** it comprises a device (2) for limiting the magnetising current installed inside the tank (3) immersed in the dielectric medium (4), and **in that** said device (2) in turn comprises:
at least one operating position (5, 6, 7, 8, 9, 10, 29) per phase,
at least one operating means (11, 12) per phase, and
at least one first switching current limiting element (17) for each phase.

2. The high-voltage electrical equipment (1) according to claim 1, **characterised in that** the device (2) for limiting the magnetising current comprises at least one second start-up/shut-down current limiting element (18) per phase, corresponding to the operating position (5).

3. The high-voltage electrical equipment (1) according to claim 2, **characterised in that** the operating position (5) of the device (2) comprises at least one connection point (25) in a primary winding (24) of the high-voltage electrical equipment (1) and **in that** the operating position (5) corresponds to the start-up position of said high-voltage electrical equipment (1).

4. The high-voltage electrical equipment (1) according to claim 1, **characterised in that** the operating position (29) of the device (2) corresponds to the connection/disconnection position of the high-voltage electrical equipment (1).

5. The high-voltage electrical equipment (1) according to any of the preceding claims, **characterised in that** the primary winding (24) of the high-voltage electrical equipment (1) comprises at least one power outlet (19, 20, 21, 22, 23) corresponding to each operating position (6, 7, 8, 9, 10) of the device (2) respectively, the number of coils in the primary winding (24) being variable such that it enables the voltage in a secondary winding (28) of the high-voltage electrical equipment (1) to be automatically regulated.

6. The high-voltage electrical equipment (1) according to claim 1, **characterised in that** the first switching current limiting element (17) comprises a resistor.

7. The high-voltage electrical equipment (1) according to claim 1, **characterised in that** the operating means (11, 12) comprises an switch.

8. The high-voltage electrical equipment (1) according to claim 7, **characterised in that** the operating means (11, 12) is a vacuum circuit breaker.

9. The high-voltage electrical equipment (1) according to claim 2, **characterised in that** the second start-up/shut-down current limiting element (18) comprises an impedance.

10. The high-voltage electrical equipment (1) according to any of the preceding claims, **characterised in that** the device (2) for limiting the magnetising current comprises a first plate (26) made of insulating material and a second plate (27) also made of insulating material, between each plate (26, 27) there being mounted at least one operating means (11, 12), the first switching current limiting element (17), the connection point (25) and at least one power outlet (19, 20, 21, 22, 23).

11. The high-voltage electrical equipment (1) according to claim 10, **characterised in that** the device (2) is housed horizontally inside the electrical equipment (1) underneath the top lid of the electrical equipment (1) or vertically on a side of said high-voltage electrical equipment (1).

12. The high-voltage electrical equipment (1) according to claim 1, **characterised in that** it comprises vacuum tap changer means (30) that is installed inside a tank (3) immersed in the dielectric medium (4).
